# EUROPEAN PATENT SPECIFICATION

(11) **EP 2 244 519 B1**
(45) Date of publication and mention of the grant of the patent: **22.08.2012**
(21) Application number: 10164034.0
(22) Date of filing: 07.10.2008
(51) Int. Cl.: H04W 72/04

(54) **Releasing common enhanced dedicated channel, E-DCH, radio resources**
Freigabe von gemeinsamen E-DCH Funkressourcen
Libération de ressources radio E-DCH communes

(30) Priority: 20.12.2007 US 15316 P
(43) Date of publication of application: 27.10.2010
(62) Divisional of application: 08865341.5
(73) Proprietor: Telefonaktiebolaget L M Ericsson (Publ), 164 83 Stockholm (SE)
(72) Inventor: Wager, Stefan, FIN-02360, ESPOO (FI); Bergman, Johan, SE-112 27, STOCKHOLM (SE); Enbuske, Henrik, SE-11341, STOCKHOLM (SE); Pradas, Jose Luis, FI-02420, JORVAS (FI)
(74) Representative: Kühn, Friedrich Heinrich

(56) References cited:
- WO-A-2007/023351
- US-A1- 2004 116 143
- US-A1- 2007 049 309
- QUALCOMM EUROPE: "Layer 1/2 aspects for enhanced UL for CELL_FACH", 3GPP DRAFT; R2-074390, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG2_RL2\TSGR2_59bis\Docs, no. Shanghai, China; 20071008, 1 October 2007 (2007-10-01), XP050136960,
- M. WIMMER - NSN: "Status Report for WI to TSG - Work Item: Enhanced Uplink for CELL_FACH State in FDD", , [Online] no. RP-070825, 27 November 2007 (2007-11-27), pages 1-4, XP002514178, TSG-RAN meeting #37; Cancun, Mexico, Nov. 27th-30th 2007 Retrieved from the Internet: URL:http://www.3gpp.org/ftp/tsg_ran/TSG_RA N/TSGR_38/Docs/> [retrieved on 2009-02-09]

## Description

### TECHNICAL FIELD

The present invention relates to a method and a device for allocating E-DCH resources in a cellular radio system.

### BACKGROUND

In release 8 of the third generation partnership project (3GPP), work is ongoing to improve the uplink performance in the so called CELL_FACH state. CELL_FACH is a Radio Resource Control (RRC) state in which the User Equipment (UE) is known on cell level (i.e. has a cell id), has a layer 2 connection but no dedicated physical layer resource associated therewith. Instead, common physical layer resources are shared between different User Equipments in the CELL_FACH state.

One planned uplink improvement planned for future improvement of cellular radio systems is to activation also in CELL_FACH of the Enhanced Dedicated Channel (E-DCH) physical channel, which is normally used as a dedicated physical layer channel in CELL_DCH state with one separate E-DCH resource allocated per user. This can be performed by using a pool of E-DCH resources that can be temporarily assigned to a user in the CELL_FACH state. Such a pool of E-DCH resources can be termed common E-DCH resources. E-DCH resources are conventionally managed by a Radio Network Controller (RNC). However the pool of common E-DCH resources is to be managed by the radio base station NodeB to speed up the allocation of resources by not having to involve the RNC in the allocation procedure. The common E-DCH configurations are broadcasted to UEs located in a cell.

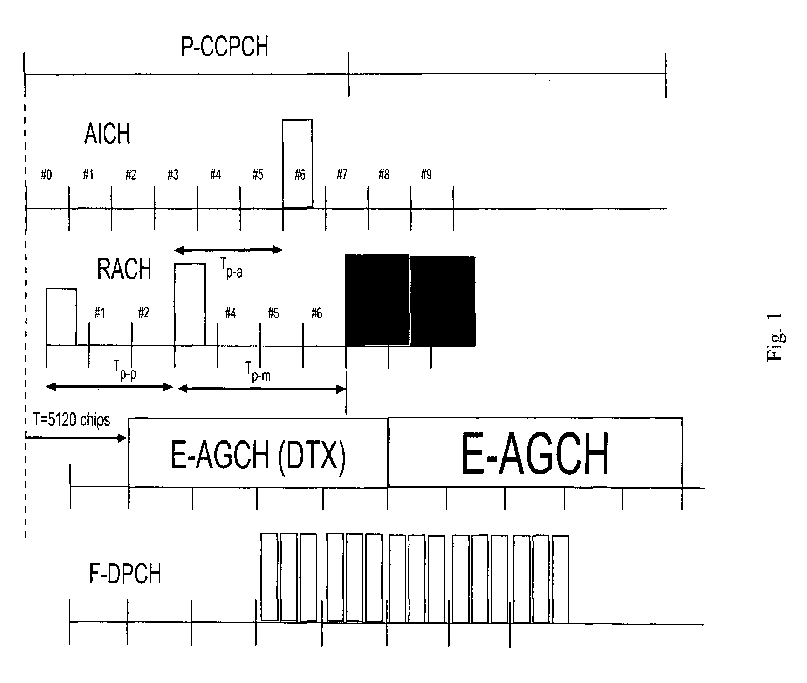

In Fig. 1 common E-DCH transmission in CELL_FACH state is shown. The procedure to access the common E-DCH channel in CELL_FACH starts in a manner corresponding to Rel-99 Random Access Channel (RACH) transmission, with preamble power ramping using randomly selected preamble signatures. Having detected the preamble, the NodeB acknowledges reception using an Acquisition Indication Channel (AICH) sequence. It also informs the UE which common E-DCH resource it has assigned to the UE.

A common E-DCH resource is defined by:
an Up -Link (UL) scrambling code
an E-DCH Radio Network Temporary Identifier (E-RNTI)
a Fractional - Dedicated Physical CHannel (F-DPCH) code and timing offset
E-DCH Absolute Grant Channel (E-AGCH)/ E-DCH Relative Grant Channel (E-RGCH)/ E-DCH HARQ Acknowledgement Indicator CHannel (E-HICH) codes and signatures, and High Speed Dedicated Physical Control Channel (HS-DPCCH) parameters such as power offsets and Channel Quality Indicator (CQI).

In the currently proposed architecture the set of common E-DCH resources available in each cell is limited. Also, it will not be possible to indicate an unlimited number of configurations in the AICH response and also NodeB and air interface resources need to be reserved for each common E-DCH resource. Hence, the E-DCH resources needs to be efficiently used. Also, US 2007/0049309 describes a method and apparatus for processing enhanced uplink Scheduling grants.

In accordance with the above, there exist a need for a method and a WCDMA radio base station that is able to efficiently use E-DCH resources.

### SUMMARY

It is an object of the present invention to provide a method and a WCDMA radio base station that is able to efficiently use E-DCH resources.

This object and others are obtained by the method, and a WCDMA radio base station as set out in the appended claims. In order to make more efficient use of the E-DCH resources it has been recognized that it is advantageous if each UE can release the common E-DCH resource as quickly as possible after a completed transmission. In addition it has been recognized that in some error cases also be beneficial for the NodeB to have a mechanism to release common E-DCH configurations for use by a new user.

In accordance with the present invention a fast and effective method of signaling the release of common E-DCH resources between UE and NodeB is provided.

### BRIEF DESCRIPTION OF THE DRAWINGS

The present invention will now be described in more detail by way of non-limiting examples and with reference to the accompanying drawings, in which:
- Fig. 1 is a view illustrating common E-DCH transmission in CELL_FACH,
- Fig. 2 is a view illustrating a cellular radio system,
- Fig. 3 is a flow chart illustrating steps performed when releasing a common E-DCH resource,
- Fig. 4 is a flow chart illustrating steps performed when releasing a common E-DCH resource, and
- Fig. 5 is a flow chart illustrating steps performed when releasing a common E-DCH resource.

### DETAILED DESCRIPTION

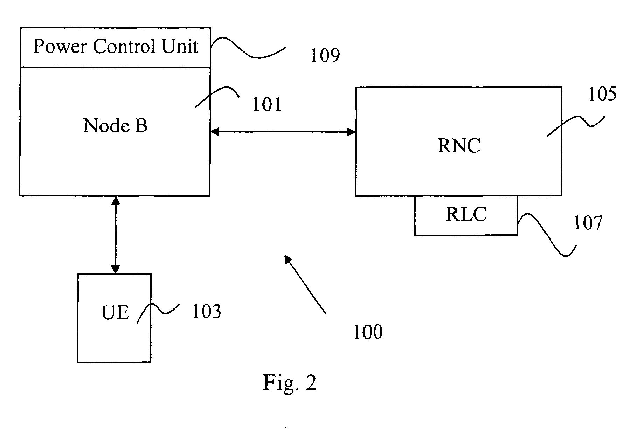

In Fig.2, a general view of a WCDMA system 100 is depicted. The system 100 comprises a base station (Node B) 101. The base station 101 serves a number of mobile terminals, usually termed User Equipment (UE) 103, located within the area covered by the base station 101. The base station 101 is also connected to a radio network controller node (RNC) 105. The RNC 105 typically also includes a Radio link controller node (RLC) 107. The RLC 107 is among other things responsible for detecting errors. The system 100 also comprises a power control unit 109, which preferably is co-located or an integral part of the base station 101.

In release 6, the WCDMA specification is extended with a new uplink transport channel, the Enhanced Dedicated Channel (E-DCH). The enhanced uplink (EUL) is a natural complement to High Speed Downlink Packet Access (HSDPA) for high-performance packet-data applications.

In accordance with one embodiment of the present invention the UE can trigger release of an E-DCH resource. For example once a UE in CELL_FACH transmitting on a common E-DCH resource has emptied its Radio Link Protocol transmit buffer, it can be configured to include the Scheduling Information (SI) field in the last Media Access Control (MAC) Packet Data Unit (PDU), indicating buffer status = 0. In particular the Total E-DCH Buffer Status (TEBS) can be set to 0. For users in CELL_FACH, the NodeB can be configured to interpret such a field as a signal that the UE has finished transmission, and will release the common E-DCH resource. In particular the radio base station NodeB can release the common E-DCH resource as soon as all Hybrid Automatic Repeat Request (HARQ) processes are finished. It can be observed that even when the HARQ process carrying the last MAC PDU with the SI field have completed, there may still be previous HARQ processes that have not yet completed. In accordance with one embodiment the NodeB is configured to release the common E-DCH resource, making it available for use by other users, once all HARQ processes have finished or when the reordering timer T1 has expired for the last MAC PDU.

In another embodiment useful to understand the present invention, the E-DCH - Transport Format Combination Identifier (E-TFCI) or the Happy bit on the physical layer control channel E-DPCCH is used to indicate release of the common E-DCH resource. As these indicators can be more error prone, such indicators can in one embodiment be used in combination with the SI field in the MAC PDU.

In accordance with one embodiment the UE is configured to release the common E-DCH resources once it has received an ACK for all HARQ processes, or reached the maximum number of HARQ transmissions. Also when the common E-DCH resources are released and new data is received from higher layer to be transmitted, the UE can be configured to start transmission by transmitting preambles to request a new common E-DCH resource.

To cover for error cases, like signaling errors or if a UE has moved out of coverage, the NodeB can also use a release timer to release the common E-DCH resource. For example, the release timer can be started when the common E-DCH resource is assigned to a UE. Once Uplink transmission has been detected, the timer is stopped and preferably reset. Detection of uplink transmission can for example be based on thresholds for the estimated Bit Error Rate (BER) or Signal to Noise Ratio (SNR) or similar of the up link DPCCH channel. If the uplink DPCCH is lost during transmission, due to e.g. a user has moved out of coverage, the timer is again started. If the uplink DPCCH is not detected from the user until the release timer expires, the common E-DCH resource is released in NodeB. Once the E-DCH resource is released by the radio base station NodeB, the E-DCH resource is released for use by other UEs.

The radio base station NodeB may also be configured to stop a UE from transmitting on a common E-DCH resource by sending a grant on E-AGCH indicating INACTIVE on all HARQ processes as a release command. The UE is then configured to interpret such a signaling as a signal to release the common E-DCH resource. As a consequence, when the UE receives a grant on E-AGCH indicating INACTIVE on all HARQ processes the UE releases the common E-DCH resource, which then is available for use by other UEs.

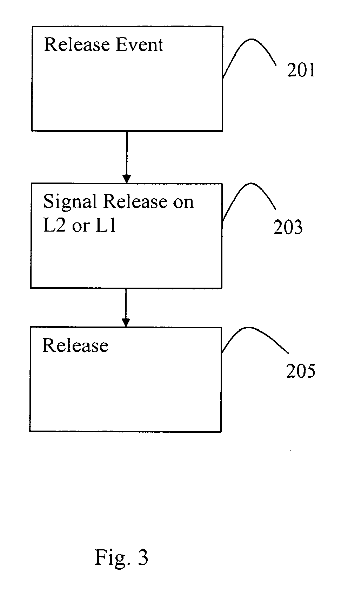

In Fig. 3 a flow chart illustrating steps performed when releasing a common E-DCH resource is shown. First in a step 201 it is determined in a User Equipment that a common E-DCH resource is to be released. An event triggering the release of an E-DCH can for example be a UE in CELL_FACH transmitting on a common E-DCH resource has emptied its Radio Link Protocol transmit buffer. Next, in a step 203, the UE signals to the radio base station the release of a common Enhanced Dedicated Channel (E-DCH) resource. In particular the signaling of the release of the common Enhanced Dedicated Channel (E-DCH) resource can be signaled Layer 1 or Layer 2 fields used in a CELL_DCH state, for other purposes. For example the release can be signaled by including the Scheduling Information (SI) field in the last Media Access Control (MAC) Packet Data Unit (PDU). In response the a signaled release of a common Enhanced Dedicated Channel, E-DCH, resource from a UE the radio base station NodeB releases the corresponding common Enhanced Dedicated Channel, E-DCH, resource, in a step 205 which then can be used for another user.

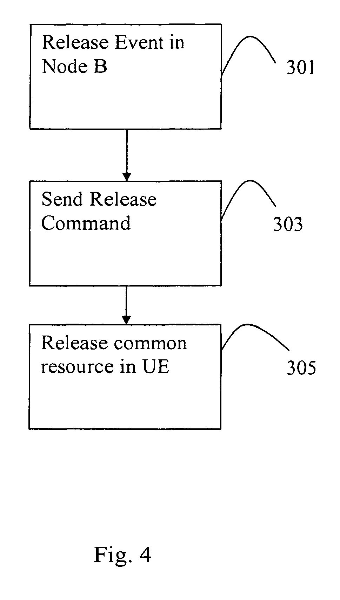

In Fig. 4 a flow chart illustrating steps performed when releasing a common E-DCH resource is shown. First in a step 301 it is determined in a radio base station Node B that a common E-DCH resource is to be released. Next, in a step 303, the radio base station NodeB stops a UE from transmitting on a common E-DCH resource by sending a grant on E-AGCH indicating INACTIVE on all HARQ processes as a release command. The UE is then configured to interpret such a signaling as a signal to release the common E-DCH resource in a step 305. As a consequence, when the UE receives a grant on E-AGCH indicating INACTIVE on all HARQ processes the UE releases the common E-DCH resource, which then is available for use by other UEs.

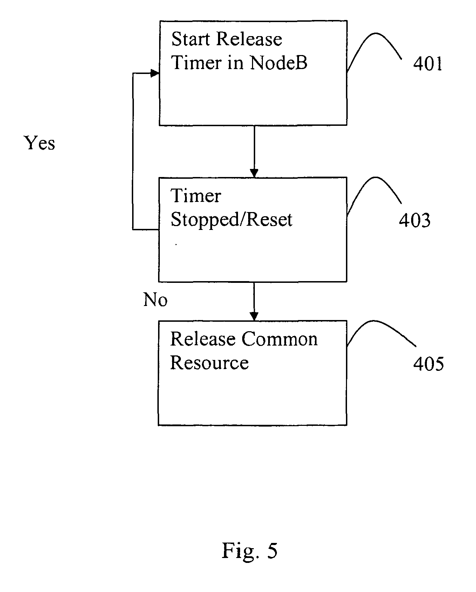

In Fig. 5 a flow chart illustrating steps performed when releasing a common E-DCH resource is shown. First in a step 401 a release timer is started when the common E-DCH resource is assigned to a UE. Once Uplink transmission has been detected, the timer is stopped and preferably reset in a step 403. Detection of uplink transmission can for example be based on thresholds for the estimated Bit Error Rate (BER) or Signal to Noise Ratio (SNR) or similar of the up link DPCCH channel. If the uplink DPCCH is lost during transmission, due to e.g. a user has moved out of coverage, the timer is again started. If the uplink DPCCH is not detected from the user until the release timer expires, the common E-DCH resource is released in a step 405 in NodeB. Once the E-DCH resource is released by the radio base station NodeB, the E-DCH resource is released for use by other UEs.

By using the method UE and radio base station as described herein a fast and reliable release of common E-DCH is obtained. This in turn will increase the E-DCH capacity in CELL_FACH.

## Claims

1. A method of releasing a common Enhanced Dedicated Channel, E-DCH, resource in a Wideband Code Division Multiple Access, WCDMA, radio base station connectable to a User Equipment, UE, in a CELL_FACH state, **characterized by** the step of:
sending (303) a grant on E-AGCH indicating INACTIVE on all Hybrid Automatic Repeat Request, HARQ, processes as a release command to the UE.

2. The method according to claim 1, **characterized by** the additional step of:
releasing (405) the common E-DCH resource upon expiry of a release timer.

3. The method according to claim 2, wherein the release timer is started (401) when the common E-DCH resource is assigned to a UE.

4. The method according to claim 2, or 3 wherein the release timer is stopped (403) when Uplink transmission has been detected.

5. A Wideband Code Division Multiple Access, WCDMA, radio base station (101) connectable to a User Equipment, UE, (103) the radio base station being adapted to release a common Enhanced Dedicated Channel, E-DCH, resource for a UE in a CELL_FACH state, **characterized in that** the radio base station is adapted to send a grant on E-AGCH indicating INACTIVE on all Hybrid Automatic Repeat Request, HARQ, processes as a release command to the UE.

6. The radio base station (101) according to claim 5, **characterized in that** the radio base station is further adapted to release the common E-DCH resource upon expiry of a release timer.

7. The radio base station according to claim 6, wherein the radio base station is adapted to start the release timer when the common E-DCH resource is assigned to a UE.

8. The radio base station according to claim 6 or 7 wherein the radio base station is adapted to stop the release timer when Uplink transmission has been detected.

## Patentansprüche

1. Verfahren zum Freigeben einer Ressource eines gemeinsamen verbesserten festgeschalteten Kanals, E-DCH, in einer Funkbasisstation für Breitband-Codemultiplexmehrfachzugriff, WCDMA, die mit einer Benutzereinrichtung, UE, in einem CELL_FACH-Zustand verbindbar ist, **gekennzeichnet durch** den Schritt:
Senden (303) einer Bewilligung auf dem E-AGCH, die auf allen Prozessen mit hybrider automatischer Wiederholungsanforderung, HARQ, INAKTIV angibt, als Freigabebefehl an die UE.

2. Verfahren nach Anspruch 1, **gekennzeichnet durch** den zusätzlichen Schritt:
Freigeben (405) der gemeinsamen E-DCH-Ressource bei Ablauf eines Freigabezeitgebers.

3. Verfahren nach Anspruch 2, worin der Freigabezeitgeber gestartet wird (401), wenn die gemeinsame E-DCH-Ressource einer UE zugewiesen wird.

4. Verfahren nach Anspruch 2 oder 3, worin der Freigabezeitgeber angehalten wird (403), wenn Aufwärtsstreckenübertragung ermittelt worden ist.

5. Funkbasisstation (101) für Breitband-Codemultiplexmehrfachzugriff, WCDMA, verbindbar mit einer Benutzereinrichtung (103), UE, wobei die Funkbasisstation dafür eingerichtet ist, eine Ressource eines gemeinsamen verbesserten festgeschalteten Kanals, E-DCH, für eine Benutzereinrichtung, UE, in einem CELL_FACH-Zustand freizugeben, **dadurch gekennzeichnet, dass** die Funkbasisstation dafür eingerichtet ist, eine Bewilligung auf dem E-AGCH, die auf allen Prozessen mit hybrider automatischer Wiederholungsanforderung, HARQ, INAKTIV angibt, als Freigabebefehl an die UE zu senden.

6. Funkbasisstation (101) nach Anspruch 5, **dadurch gekennzeichnet, dass** die Funkbasisstation ferner dafür eingerichtet ist, die gemeinsame E-DCH-Ressource bei Ablauf eines Freigabezeitgebers freizugeben.

7. Funkbasisstation nach Anspruch 6, worin die Funkbasisstation dafür eingerichtet ist, den Freigabezeitgeber zu starten, wenn die gemeinsame E-DCH-Ressource einer UE zugewiesen wird.

8. Funkbasisstation nach Anspruch 6 oder 7, worin die Funkbasisstation dafür eingerichtet ist, den Freigabezeitgeber anzuhalten, wenn Aufwärtsstreckenübertragung ermittelt worden ist.

## Revendications

1. Procédé destiné à libérer une ressource de canal dédié amélioré, E-DCH, commune dans une station de base radio d'accès multiple par répartition en code à large bande, WCDMA, pouvant être connectée à un équipement utilisateur, UE, dans un état « CELL_FACH », **caractérisé par** l'étape ci-dessous consistant à :
envoyer (303) une commande d'octroi sur un canal E-AGCH indiquant un état INACTIF sur tous les processus de demande de répétition automatique hybride, HARQ, sous la forme d'une commande de libération, à l'équipement UE.

2. Procédé selon la revendication 1, **caractérisé par** l'étape supplémentaire ci-dessous consistant à :
libérer (405) la ressource de canal E-DCH commune à l'expiration d'un temporisateur de libération.

3. Procédé selon la revendication 2, dans lequel le temporisateur de libération est démarré (401) lorsque la ressource de canal E-DCH commune est affectée à un équipement UE.

4. Procédé selon la revendication 2 ou 3, dans lequel le temporisateur de libération est arrêté (403) lorsqu'une transmission en liaison montante a été détectée.

5. Station de base radio d'accès multiple par répartition en code à large bande, WCDMA, (101) pouvant être connectée à un équipement utilisateur, UE, (103), la station de base radio étant apte à libérer une ressource de canal dédié amélioré, E-DCH, commun, pour un équipement UE dans un état « CELL_FACH », **caractérisée en ce que** la station de base radio est apte à envoyer une commande d'octroi sur un canal E-AGCH indiquant un état INACTIF sur tous les processus de demande de répétition automatique hybride, HARQ, sous la forme d'une commande de libération, à l'équipement UE.

6. Station de base radio (101) selon la revendication 5, **caractérisée en ce que** la station de base radio est en outre apte à libérer la ressource de canal E-DCH commune à l'expiration d'un temporisateur de libération.

7. Station de base radio selon la revendication 6, dans laquelle la station de base radio est apte à démarrer le temporisateur de libération lorsque la ressource de canal E-DCH commune est affectée à un équipement UE.

8. Station de base radio selon la revendication 6 ou 7, dans laquelle la station de base radio est apte à arrêter le temporisateur de libération lorsqu'une transmission en liaison montante a été détectée.
